Europäisches Patentamt

European Patent Office

Office européen des brevets

(19)

(11) Publication number: **0 084 427**

**A1**

# (12) EUROPEAN PATENT APPLICATION

(21) Application number: 83300129.0

(22) Date of filing: 11.01.83

(51) Int. Cl.³: **F 16 L 55/18**
**B 23 B 41/00**

(30) Priority: 12.01.82 GB 8200850

(43) Date of publication of application:
27.07.83 Bulletin 83/30

(84) Designated Contracting States:
AT BE CH DE FR IT LI LU NL SE

(71) Applicant: EDMUND NUTTALL LIMITED
22, Grosvenor Gardens
London, SW1W ODR(GB)

(72) Inventor: Charlesworth, John Michael
26, South Parade
Ossett Yorkshire(GB)

(72) Inventor: Lee, Melvyn
14, Thornville Place Scout Hill
Dewsbury Yorkshire(GB)

(74) Representative: Smith, Geoffrey Leonard et al,
Marks & Clerk 57/60 Lincoln's Inn Fields
London WC2A 3LS(GB)

(54) Cutting method and equipment.

(57) A cutter means (25) operating in the manner of a tank cutter to cut the periphery of a cut from a given position by purely axial advance so that no monitoring is necessary during cutting. The cutter is then reset to a new position if a hole needs to be enlarged.

FIG.1.

230P43578                    - 1 -

Title:-  Cutting Method and Equipment

This invention relates to remotely controlled cutting methods
and equipment.

In recent times much effort has been devoted to the need for
replacement of water supply pipes and sewerage ducts, many of
which were laid in the nineteenth century and have therefore
reached the end of their working life.  Total replacement is
in most cases neither economically nor practically feasible
and the alternative of providing a lining therefore comes into
consideration.  Such linings may be inserted or formed in situ.
Reference may be made to United Kingdom Patent specifications
GB A 1449445 and GB A 1423819 for examples of practical processes
of forming a lining in situ.

It will be appreciated that where, as is almost without exception
the case, lateral or other connections exist, the lining has
to be cut, after insertion, to open communication to the connections.
Where the lining is large enough to allow access, e.g. over
2 feet (60 cm) diameter, this presents no great difficulty,
but where the pipes are too small to admit of access, it is
normally necessary to enter via the laterally connected pipe,
which normally involves excavation.  The cost of excavation
is high and the need for it detracts from the commercial value
of lining the existing pipe or conduit rather than replacing
it.

In an alternative approach a cutting tool may be drawn through the lined pipe and remotely controlled to effect the required cutting.

In our co-pending European application 80304055.9 (published under No. 0029343 there is described and claimed a lining cutter comprising a carriage adapted to be drawn through a lined pipe or conduit, a cutter adapted for rotary and radial adjustment on the carrier so as to cut through the lining at desired locations, a television camera mounted on the carriage so as to be trainable on the operative end of the cutter to monitor the position and activity thereof, and remotely operable controls for positioning and operating the cutter and camera.

In the equipment and method described in the above-mentioned co-pending application, the cutter is shown as essentially a bit or routing cutter which has to be driven through the lining and then moved in translation so as to follow the contour of the hole to be cut. With such a continuously moving cutter, its progress has preferably to be monitored the whole time it is operating, and a television camera is provided to be trained on its working end. However it is not always practicable to ensure that the optical path between the camera and the cutter is not obscured by debris.

It is an object of the invention to provide a form of cutter equipment and method which may be operated without continuous monitoring.

In accordance with a first aspect of the invention, there is provided a method of cutting through a lining in a lined pipe or conduit wherein cutting equipment is introduced to the interior of the lined pipe or conduit and a cutter mechanism on the cutting equipment is remotely controlled to cut an aperture through the lining, in which the cutter mechanism is of the type to cut the complete periphery of an aperture as the cutter rotates about and advances along an axis, for example in this manner of a tank cutter or hole saw, and in which enlargement of the aperture is achieved, where necessary, by making one or more further cuts along different axes.

Thus, during the cutting action, when debris is being created, the movement of the cutter is purely an axial advance and there is no need to maintain a continuous monitoring of the cutter. Monitoring of the position during the positioning and re-positioning of the cutter, when no debris is being created, is adequate.

In accordance with a second aspect of the invention, there is provided remotely controlled cutting equipment comprising a carriage carrying a cutter drive so as to enable the drive to be adjusted by remote control rotationally and radially of lined pipes or conduit within which the equipment is to operate, a cutter drivable by the cutter drive and adapted to cut the complete periphery of the aperture in the manner of a tank cutter or hole saw, and monitoring equipment including a television camera adapted to monitor the positioning of the cutter prior to cutting.

The invention will be further described with reference to the accompanying drawings which show a preferred embodiment of the invention and in which :-

Figure 1 is a side elevation of a cutting machine;

Figure 2 is a plan view of the machine of Figure 1;

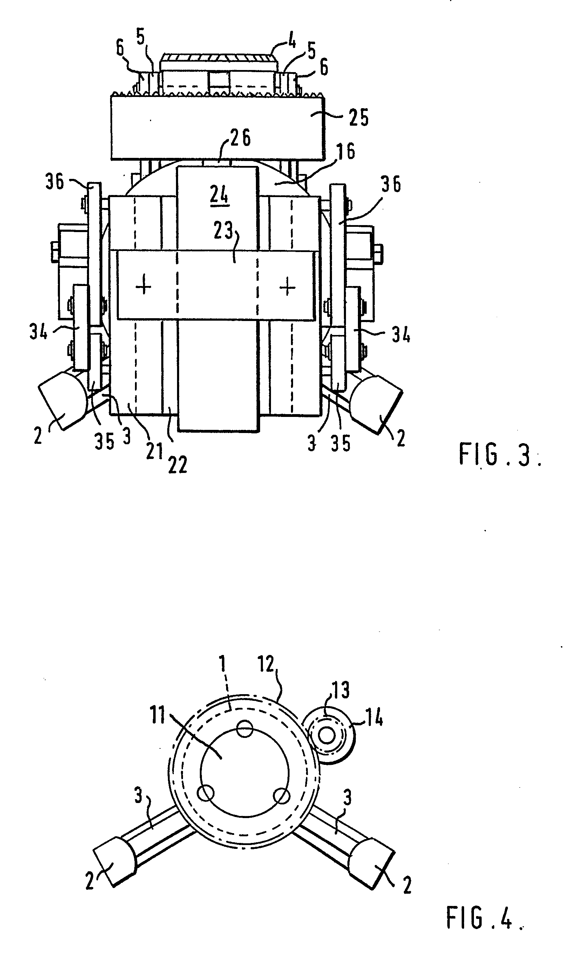

Figure 3 is a front end elevation of the machine of Figures 1 and 2, and

Figure 4 is a rear end elevation of the machine of Figures 1 to 3.

The machine illustrated comprises a carriage having a body 1 which is mounted on a pair of skids 2 by means of legs 3. The body is thus adapted to be pulled by means of a winch through a pipeline or duct which has previously been lined, and it will normally be accompanied by a second body or carriage carrying a television camera to monitor

0084427

- 5 -

the positioning. In order to stabilise the position of the body 1 within the pipeline or duct, it is provided with a clamping pad 4 mounted on links 5 and 6 pivoted respectively to a cross beam 7 and bracket 8 on the body 1. The cross beam 7 is connected to the piston rod 9 of a pneumatic cylinder 10, which is preferably double acting to provide positive advance and retraction of the clamping pad 4 against or away from the upper part of the lining of the pipe or conduit. The length of the legs 3 will be chosen to suit the size of the pipe or conduit, and this may be from about a nine inch (22.5cm) diameter up to sizes large enough for human access.

An inner body or shaft 11 is mounted coaxially within the body 1 by means of bearings (not shown). Protruding from the rear end of the body 1, the inner shaft or body 11 carries a pinion 12 in mesh with a smaller pinion 13 driven by a rotary reversible air motor mounted on the body 1. Pneumatic connections to the motor 14 are shown at 15.

Immediately adjacent the forward end of the body 1, the inner body or shaft 11 is provided with a locking collar 16 provided with a circumferentially extending series of apertures or indentations adapted to co-operate with the end of a locking pin 17 to lock the collar 16 and inner body or shaft 11 to the outer body. The locking pin 17 is mounted on a piston rod of a pneumatic piston 18.

At its distal end, the inner body or shaft 11 carries a slideway 21 in which is mounted a slide block 22 carrying a mounting block 23 and a pneumatic cutter motor 24. A cylindrical cutter 25 is mounted on the output shaft of the motor 24.

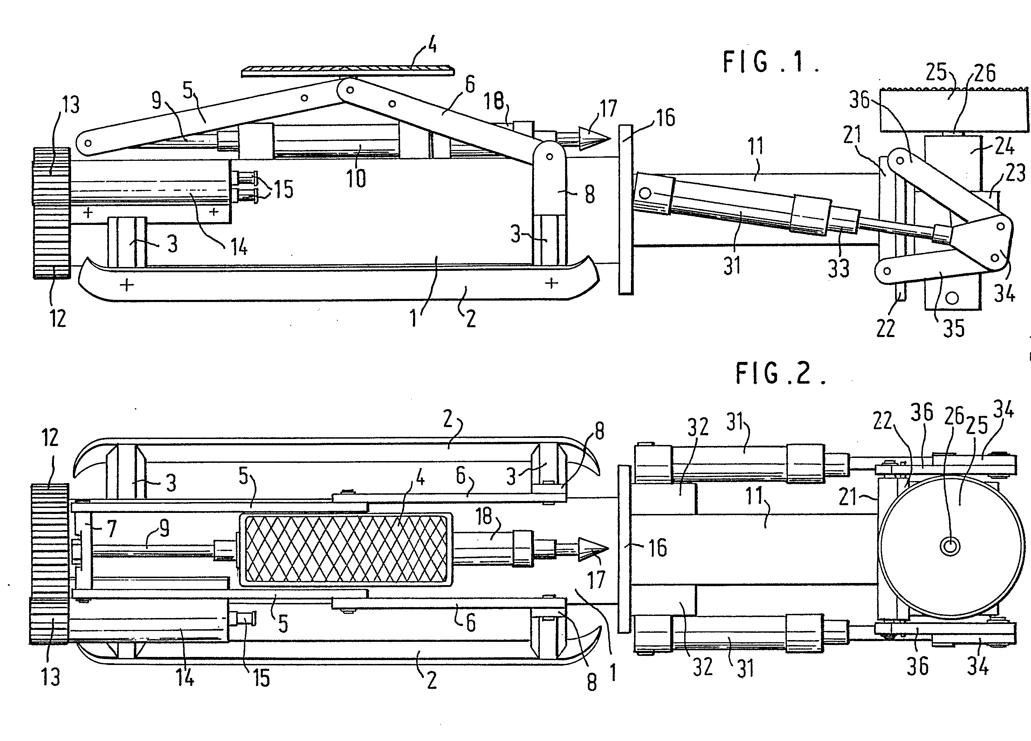

The side block 22 is operated by means of a pair of pneumatic piston cylinder unit 31 pivoted to mounting blocks 32 fixed to the inner body or shaft 11. The piston rods 33 carry brackets 34 to which are pivoted links 35 and 36 of which the opposite ends are pivoted respectively to the slide block 21 and the slide 22. Thus, on retraction of the piston rods 33, the slide block will move upwards as illustrated in Figure 1 to advance the cutter motor 24 and cutter 25 in an axial direction, and retraction will be achieved on advance of the piston rod 33. The piston cylinder units 31 may be double acting or single acting with spring return if required.

In operation, the positions of laterals are to be ascertained by inspection as the carriages with the cutter and monitoring camera are advanced. Upon location of the cutter longitudinally of the pipe or conduit in alignment with a lateral to be cut, the body 1 is halted and piston/cylinder unit 10 is operated to clamp the body in position by means of the clamping pad 4.

The motor 14 is then started to rotate the inner body 11 and, with it, the cutter assembly about the axis of the body 1 until the required orientation is achieved. The motor 14 is then stopped and the locking pins 17 advanced to engage the locking column 16. All this is done under monitoring through the appropriate camera. The cutter is now in a position to be advanced to make a cut. The pneumatic motor 24 is therefore started to set the cutter in rotation and it is advanced by means of the piston/ cylinder unit 31. The cut is completed when the lining has been completely penetrated and the cutter is then retracted. It is usually found that speeding up the cutter, except when it is in a completely vertical position, is adequate to eject the disc of material cut from the lining and the cutter can then be repositioned either to enlarge the aperture made or to cut a fresh aperture.

It may be advantageous in certain circumstances to have the cutter assembly adjustable axially of the duct by providing for longitudinal adjustment of the inner body or shaft 11 relative to the body 1, e.g. by means of a lead screw or rack and pinion adjustment.

Various other modifications may be made within the scope of the invention.

CLAIMS

1.  A method of cutting through a lining in a lined pipe or conduit wherein cutting equipment (1) is introduced to the interior of the lined pipe or conduit and a cutter mechanism (25) on the cutting equipment (1) is remotely controlled to cut an aperture. through the lining, characterised in that the cutter mechanism (25) is of the type to cut the complete periphery of an aperture as the cutter rotates about and advances along an axis, for example in the manner of a tank cutter or hole saw, and in that enlargement of the aperture is achieved, where necessary, by making one or more further cuts along different axes.

2.  A method of cutting a lining according to claim 1, characterised in that the position of the cutter mechanism (25) is monitored by remote television camera means while being positioned for cutting, but not during the actual cutting operation.

3.  Remotely controlled cutting equipment comprising a carriage (1) carrying a cutter drive (24) so as to enable the drive to be adjusted by remote control rotationally and radially of lined pipes or conduits within which the equipment is to operate, and a cutter mechanism (25) drivable by the cutter drive (24) characterised in that the cutter means (25) is adapted to cut the complete periphery of the aperture in the manner of a tank cutter or hole saw, and monitoring equipment including a television camera adapted to monitor the positioning of the cutter mechanism (25) prior to cutting.

4. Cutting equipment according to claim 3, characterised in that the carriage (1) is mounted on skids (21) or like guides for transport through the lined pipes or conduit.

FIG.1.

FIG.2.

0084427

FIG.3.

FIG.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 243 879 (J.B.GILL) *Column 3, line 58 to column 4, line 25; column 4, line 59 to column 5, line 8; figures 1-5* | 1 | F 16 L 55/18 B 23 B 41/00 |
| | --- | | |
| D,A | EP-A-0 029 343 (EDMUND NUTTALL LIMITED) *Abstract* | 1-4 | |
| | --- | | |
| A | DE-A-2 210 356 (NIPPON KOKAN K.K.) | | |
| | ----- | | |

TECHNICAL FIELDS SEARCHED (Int. Cl. 3)

F 16 L
B 23 B

The present search report has been drawn up for all claims

| Place of search THE HAGUE | Date of completion of the search 06-04-1983 | Examiner ANGIUS P. |
|---|---|---|